# EUROPÄISCHE PATENTSCHRIFT

(11) **EP 2 935 432 B1**
(45) Veröffentlichungstag und Bekanntmachung des Hinweises auf die Patenterteilung: **17.08.2016**
(21) Anmeldenummer: 13808027.0
(22) Anmeldetag: 18.12.2013
(51) Int. Cl.: C08K 3/36, C08K 3/34, C08K 3/00

(54) **WÄRMELEITFÄHIGER KUNSTSTOFF**
THERMALLY CONDUCTIVE PLASTIC
MATIÈRE PLASTIQUE CONDUCTRICE DE CHALEUR

(30) Priorität: 18.12.2012 EP 12197839; 02.09.2013 EP 13182652
(43) Veröffentlichungstag der Anmeldung: 28.10.2015
(73) Patentinhaber: Quarzwerke GmbH, 50226 Frechen (DE)
(72) Erfinder: KRUBER, Dirk, 53347 Alfter (DE); KLAWA, Michael, 51399 Burscheid (DE); HILGERS, Thorsten, 50169 Kerpen (DE); SZILLUWEIT, Robert, 50226 Frechen (DE)
(74) Vertreter: dompatent von Kreisler Selting Werner - Partnerschaft von Patent- und Rechtsanwälten mbB
(86) Internationale Anmeldenummer: PCT/EP2013/077066
(87) Internationale Veröffentlichungsnummer: WO 2014/095984

(56) Entgegenhaltungen:
- EP-A1- 1 209 189

## Beschreibung

Gegenstand der vorliegenden Erfindung ist ein wärmeleitfähiger Kunststoff.

Kunststoffe sind weitverbreitete Materialien für vielfältige Anwendungen. Kunststoffe zeichnen sich durch gute Verformbarkeit, Isolationsverhalten und akzeptable Festigkeiten auf.

Kunststoffe zeigen typischerweise eine geringe Wärmeleitfähigkeit. Typische Wärmeleitfähigkeiten von Kunststoffen liegen im Bereich von etwa 0,2 bis 0,3 W/mK.

Es ist grundsätzlich bekannt, Kunststoffe mit anderen Materialien zu füllen, um die Eigenschaften zu verändern. Die Materialien hierfür sind zahlreich. Zur Beeinflussung der Wärmeleitfähigkeit werden beispielsweise Bornitride eingesetzt, die bei einer Füllung des Kunststoffs die Wärmeleitfähigkeit mehr als verdoppeln können. Die zur Erhöhung der Leitfähigkeit verwendeten Füllstoffe werden in relativ großen Mengen beigefügt, so dass neben den Einflüssen auf die mechanischen Eigenschaften, die Farbe, die Dichte, etc. der Preis eine wichtige Rolle spielt.

Aufgabe der vorliegenden Erfindung war es, Füllstoffe bereit zu stellen, um wünschenswerte Eigenschaften in der Kunststoffzusammensetzung zu erreichen.

Gelöst wird die Aufgabe durch wärmeleitfähige Zusammensetzung enthaltend einen Kunststoff sowie 20 bis 80 Gew.-% eines Additivs ausgewählt aus Inselsilikaten, metallischem Silizium und Mischungen hiervon.

Erfindungsgemäß wird also ein Kunststoff mit einem Additiv vermischt, das ausgewählt wird aus Inselsilikaten oder metallischem Silizium bzw. Mischungen davon und in einer Menge von 20 bis 80 Gew.-% der Zusammensetzung enthalten ist. Mengen von 30 bis 80 Gew.-% sind bevorzugt. Zusätzlich enthält die Zusammensetzung einen Kunststoff, der den Großteil der verbleibenden Zusammensetzung ausmacht. Die Menge an Kunststoff liegt bevorzugt im Bereich von 15 bis 70%. Zusätzlich zu dem Kunststoff können auch weitere Hilfsstoffe, insbesondere Farbstoffe, Schlagzähigkeitsmodifizierer, etc. vorhanden sein.

In einer Ausführungsform der Erfindung sind die Inselsilikate Aluminosilikate, insbesondere Alumosilikate. Ein besonders bevorzugtes Inselsilikat ist das Dysthen.

Als Inselsilikate (Nesosilikate) bezeichnet man Silikate, deren Silikatanionen aus isolierten SiO₄-Tetraedern bestehen, d.h. die SiO₄-Tetraeder sind nicht über Si-O-Si-Bindungen miteinander verbunden.

Zu dieser Abteilung der Silikate zählen die bedeutenden gesteinsbildenden Minerale der Granat- und Olivingruppe, Zirkon sowie die wirtschaftlich oder petrologisch wichtigen Alumosilikate Andalusit, Sillimanit, Disthen sowie Staurolith und Topas.

Aus der einfachen Struktur des SiO₄-Komplexanions ergibt sich keine ausgeprägte Richtungsabhängigkeit der Eigenschaften der Inselsilikate. Sie sind oft kubisch, tetragonal, trigonal, hexagonal oder orthorhombisch und bilden meist isometrische Kristalle. Die Minerale dieser Abteilung sind meist hart und besitzen einen hohen Brechungsindex sowie eine relativ hohe Dichte.

Als Kunststoff eignen sich Elastomere, thermoplastische oder duroplastische Polymere, insbesondere Kunststoffe ausgewählt aus Polyamid, Polyethylen, Polypropylen, Polystyrol, Polycarbonat, Polyester, Polyurethan, Epoxidharzen sowie Mischungen und Copolymerisate davon.

Copolymere umfasst Varianten, in denen Prepolymere oder Monomere verschiedener chemischer Grundgerüste miteinander polymerisiert werden. Er umfasst auch Mischungen von mehr als zwei Substanzen, die auch als Terpolymere bezeichnet werden.

In einer besonders bevorzugten Ausführungsform werden Additive kombiniert eingesetzt, beispielsweise verschiedene Inselsilikate oder eine Mischung von einem Inselsilikat und metallischem Silizium oder es können aber auch beispielsweise mehrere verschiedene Inselsilikate miteinander vermischt werden oder mehrere Inselsilikate mit metallischem Silizium.

Geeignete Korngrößen der Additive liegen im Bereich von etwa 1 bis 50 µm (d50). d50 bedeutet, dass 50 Gew.-% eine kleinere und 50 Gew-% eine größere Korngröße aufweisen. Solche Korngrößen-Kennwerte können durch Laserbeugung ermittelt werden. d50 Korngrößen von mindestens 2 µm oder mindestens 5 µm sind bevorzugt. Die d50 Korngröße liegt bevorzugt unter 40 oder unter 30 µm. In einigen Ausführungsformen liegt die Korngröße bei 2 bis 20 µm, in anderen bei 10 bis 30 oder 10 bis 50 µm.

In einer bevorzugten Ausführungsform zeigen die Körner eine relativ enge Korngrößenverteilung, so dass d90/d50 ≤ 3 oder ≤ 2 ist.

Gegenstand der Erfindung ist auch ein Verfahren zur Herstellung einer erfindungsgemäßen wärmeleitfähigen Zusammensetzung umfassend den Schritt des Vermischens eines Kunststoffs mit 20 bis 80 Gew.-%, bevorzugt 30 bis 80 Gew.-% mindestens eines Additivs ausgewählt aus Inselsilikaten, metallischem Silizium und Mischungen hiervon.

In einigen Ausführungsformen der Erfindung liegt der Anteil der erfindungsgemäß eingesetzten Füllstoffe bei 40 Gew.-% oder mehr, bei 50 Gew.-% oder mehr oder 60 Gew-% oder mehr.

Ein weiterer Gegenstand der Erfindung ist die Verwendung eines Additivs ausgewählt aus Inselsilikaten und metallischem Silizium und Mischungen davon zur Verbesserung der Wärmeleitfähigkeit von Kunststoff.

### Beispiele

**1. Eingesetzte Füllstoffe**

| **Körnungsdaten [µm]** | **Disthen Probe 1** | **Disthen Probe 2** | **Disthen Probe 3** | **Silizium (Si)** | **Bornitrid (BN)** |
|---|---|---|---|---|---|
| d10 | 0,8 | 1,5 | 3,5 | 0,9 | 0,7 |
| d50 | 5 | 10 | 23 | 2,5 | 5 |
| d90 | 16 | 20 | 50 | 8 | 12 |

| | | | | | |
|---|---|---|---|---|---|
| TREFIL 283-400 AST (Fa. Quarzwerke): Wollastonit, d50 ca. 5 µm SILBOND 4000 AST (Fa. Quarzwerke): Cristobalit, d50 ca. 5 µm TREMICA 1155-010 AST(Fa. Quarzwerke): Muskovit, d50 ca. 5 µm Bornitrid, TREFIL, SILBOND und TREMICA wurden als Vergleichsmaterialien eingesetzt. | | | | | |

### 2. Herstellung der gefüllten Kunststoffe

Im Falle der Thermoplaste wurde der Füllstoff über einen Extruder (Fa. Leistritz, ZSE 27 MAXX) in Polycaprolactam (PA6) eincompoundiert. Aus den Compounds wurden mittels Spritzguss (Fa. Demag, Ergotech 100/420-310) Formteile hergestellt:
Mehrzweckprüfstab (ISO 3167 Typ A)

### Platte 80 mm * 80 mm * 2 mm

Die für die Messung der Wärmeleitfähigkeit benötigten Prüfkörper wurden aus den Platten mechanisch ausgearbeitet. Zur Messung quer zur Extrusionsrichtung (Z-Richtung) erfolgte ein Ausdrehen von Scheiben mit d = 12,7 mm in Zentralposition der Platten. Für die Bestimmung der Wärmeleitfähigkeit in Spritzrichtung (X-Richtung) mussten je 6 Stäbe mit 12,7 mm Länge und 2 mm Breite ausgefräst werden, die dann zur Messung in einem speziellen Probenhalter um 90° gedreht zusammengespannt wurden. Für Duroplaste wurden die Füllstoffe mittels eines Vakuummischers (Fa. PC-Laborsysteme, Labotop) in Epoxidharze (Fa. Huntsman, Araldite CY 184, Aradur HY 1235, Beschleuniger DY 062) eingearbeitet. Die Formmassen wurden zu Platten der Dimension 250mmx250mmx2mm gegossen und thermisch gehärtet. Aus diesen Teilen wurden ca. 20mmx20mmx2mm große Probekörper ausgesägt.

### 3. Messungen

An den so hergestellten Probekörpern wurden mechanische Eigenschaften sowie die Wärmeleitfähigkeit gemessen.

Es ergaben sich folgende Werte für die Wärmeleitfähigkeit in PA 6 (LFA 447 *Na-noFlash^{®}*, Fa. Netzsch):

| **Füllstoff** | **Füllstoff-anteil** | | **Z-Richtung** | **X-Richtung** |
|---|---|---|---|---|
| | | **Dichte** | **WLF** | **WLF** |
| | [Ma%] | [g/cm³] | [W/m K] | [W/m K] |
| Disthen Probe 1 | 65 | 1,997 | 1,2 | 1,3 |
| | 70 | 2,092 | 0,9 | 1,6 |
| | 75 | 2,263 | 1,3 | 2,0 |
| Disthen Probe 2 | 65 | 1,994 | 1,0 | 1,3 |
| | 70 | 2,086 | 1,1 | 1,5 |
| | 75 | 2,234 | 1,3 | 1,8 |
| Disthen Probe 3 | 65 | 2,004 | 0,9 | 1,5 |
| | 70 | 2,139 | 1,3 | 1,8 |
| | 75 | 2,525 | 1,3 | 2,3 |
| TREFIL 283-400 AST | 65 | 1,837 | 0,6 | 1,0 |
| SILBOND 4000 AST | 65 | 1,676 | 1,1 | 1,1 |
| TREMICA 1155-010 AST | 65 | 1,800 | 0,4 | 1,2 |
| PA6 | 0 | 1,140 | 0,3 | 0,3 |

Von nachfolgenden Mischungen wurden nur einzelne Füllgrade bezüglich der Wärmeleitfähigkeit gemessen:

| **Mischungen** | **Füllgrad [Ma %]** | **Wärmeleitfähigkeit λ Z-Richtung [W/mK]** |
|---|---|---|
| PA6 + Disthen 1;37%/Si9%/BN1% | 50 | 0,9 |
| PA6+Si | 50 | 1,1 |
| PA6+BN | 40 | 0,9 |

Die Daten zeigen, dass hohe Füllgrade und gröbere Füllstoffe (höhere d50-Werte) bessere Wärmeleitfähigkeiten ergeben, deutlich besser als die Vergleichsmaterialien. Im Vergleich zu Cristobalit ist das erfindungsgemäße Inselsilikat deutlich weicher (geringere Mohshärte), was zu einem deutlich verringerten Verschleiß an den eingesetzten Geräten, z.B. Compoundern führt.

Nachfolgend die mechanischen Daten der disthenhaltigen Proben in PA6 (Universalzugmaschine Zwick/Roell Z 202; Pendelschlagwerk Zwick/Roell HIT 25P) :

| **Produkt** | **Füllgehalt %** | **Zugeigenschaften** | | |
|---|---|---|---|---|
| | | **Zugfestigkeit MPa** | **Bruchdehnung %** | **E-Modul MPa** |
| Disthen Probe 1 | 65 | 93,7 | 3,7 | 10000 |
| | 70 | 94,2 | 3,3 | 11300 |
| | 75 | 95,5 | 2,5 | 15500 |
| Disthen Probe 2 | 65 | 96,7 | 3,8 | 11000 |
| | 70 | 95,8 | 3,2 | 12700 |
| | 75 | 95,8 | 2,5 | 15700 |
| Disthen Probe 3 | 65 | 92,2 | 3,4 | 11100 |
| | 70 | 93,7 | 3 | 13500 |
| | 75 | 94,7 | 2,5 | 16300 |
| PA6 | 0 | 85 | 8,4 | 3210 |

| **Produkt** | **Füllgehalt** | **Pendelschlagversuche Charpy** | |
|---|---|---|---|
| | **%** | **Schlagzähigkeit kJ/m²** | **Kerbschlagzähigkeit kJ/m²** |
| Disthen Probe 1 | 65 | 42,16 | 3,1 |
| | 70 | 37,04 | 2,76 |
| | 75 | 19,74 | 2,5 |
| Disthen Probe 2 | 65 | 44,36 | 3,07 |
| | 70 | 34,16 | 2,82 |
| | 75 | 20,97 | 2,5 |
| Disthen Probe 3 | 65 | 37,81 | 2,93 |
| | 70 | 30,69 | 3,18 |
| | 75 | 24,25 | 2,85 |
| PA6 | 0 | No Break | 5,5 |

| **Produkt** | **Füllgehalt** | **Pendelschlagversuche Izod** | |
|---|---|---|---|
| | **%** | **Schlagzähigkeit kJ**/**m²** | **Kerbschlagzähigkeit kJ/m²** |
| Disthen Probe 1 | 65 | 34,52 | 3,25 |
| | 70 | 30,43 | 3,22 |
| | 75 | 20 | 3,24 |
| Disthen Probe 2 | 65 | 34,35 | 3,34 |
| | 70 | 28,7 | 3,38 |
| | 75 | 19,18 | 3,26 |
| Disthen Probe 3 | 65 | 30,62 | 3,45 |
| | 70 | 24,05 | 3,72 |
| | 75 | 20,09 | 3,7 |
| PA6 | 0 | 107 | 2,5 |

Trotz der hohen Füllstoffgehalte zeigen die erfindungsgemäßen Materialien gute mechanische Eigenschaften. Je feiner Füllstoff (kleinerer d50), desto besser die mechanischen Eigenschaften.

| **Produkt** | **Füllgehalt** | **Wärmeformbeständigkeit** |
|---|---|---|
| | % | (ISO 75 HDT/A (1.8 MPa) °C |
| Disthen Probe 1 | 65 | 142,45 |
| | 70 | 143,73 |
| | 75 | 164,38 |
| Disthen Probe 2 | 65 | 151,25 |
| | 70 | 157,25 |
| | 75 | 166,86 |
| Disthen Probe 3 | 65 | 150,49 |
| | 70 | 165,0 |
| | 75 | 172,7 |
| PA6 | 0 | 75 |

Die erfindungsgemäß gefüllten Kunststoffe zeigen hervorragende Wärmeformbeständigkeit.

Eine duroplastische Mischung aus 63 Gew.-% Disthen und 37 Gew.-% Epoxidharz hatte folgende Eigenschaft:

| **mech. Eigenschaften** | | |
|---|---|---|
| Elastizitätsmodul [Mpa] | ISO 178 | 11500 |
| Bruchspannung [Mpa] | ISO 178 | 108 |
| Bruchdehnung [%] | ISO 178 | 1,06 |
| Schlagzähigkeit [kJ/m2] (Charpy) | ISO 179/1eU | 7,10 |

| **elektrische Eigenschaften** | | |
|---|---|---|
| elek. Leitfähigkeit (Oberfläche)[Ω] | DIN IEC 167 | >10¹³ |

| **thermische Eigenschaften** | | |
|---|---|---|
| thermische Leitfähigkeit [W/mK] | )* | 1,35 |

| | | |
|---|---|---|
| )* gemessen mit NanoFlash | | |

Im Vergleich dazu besitzt der ungefüllte Duroplast (100% des Epoxidharzes) eine Wärmeleitfähigkeit von nur 0,2 W/mK.

### REM Analyse

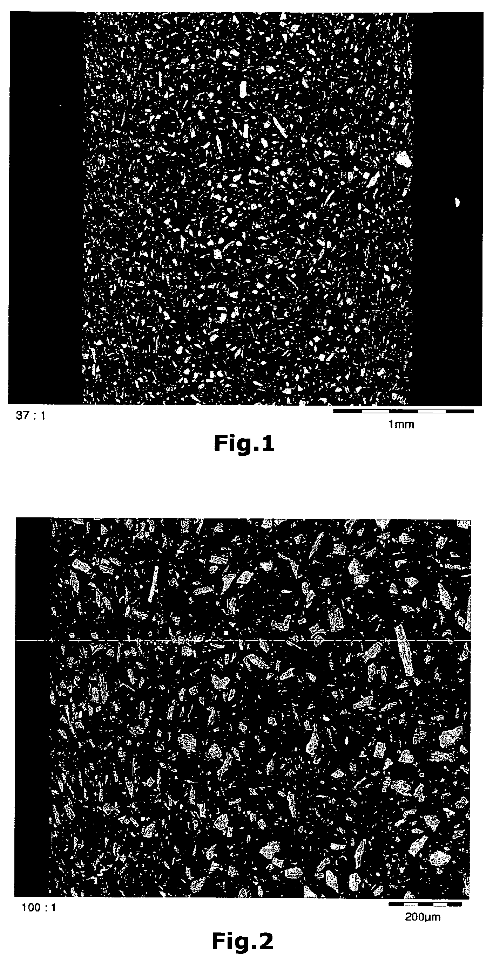

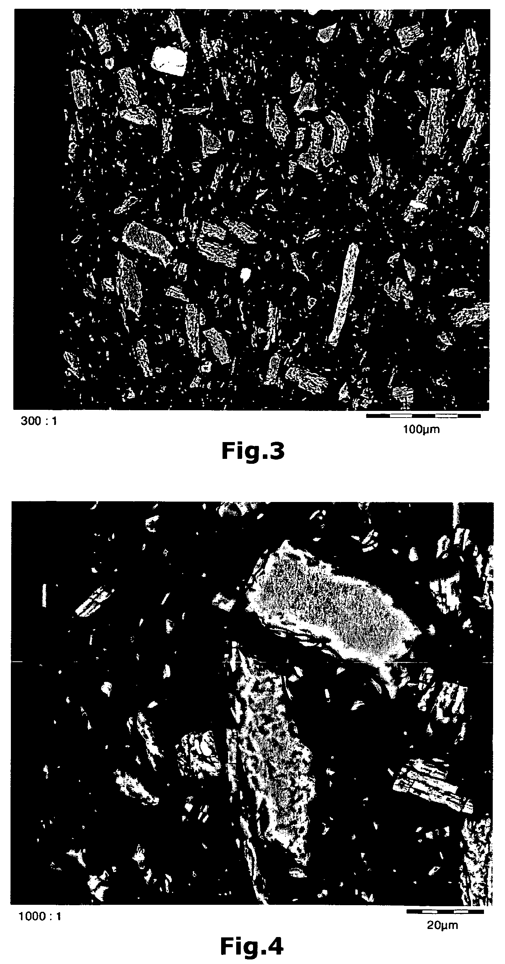

Die Materialien wurden mit Rasterelektronenmikroskopie (Joel JSM 7600F) untersucht. Die Figuren 1 bis 4 zeigen Aufnahmen von PA6 und Disthen Probe 3 (60 Gew.-%) in unterschiedlichen Vergrößerungsstufen.

Es zeigt sich, dass die Materialien, obwohl sie keine Verbindungen innerhalb des Materials erzielen, trotzdem gute Wärmeleitfähigkeiten bewirken.

## Patentansprüche

1. Zusammensetzung enthaltend einen Kunststoff sowie 20 bis 80 Gew.-% eines Additivs ausgewählt aus Inselsilikaten, metallischem Silicium und Mischungen hiervon.

2. Zusammensetzung nach Anspruch 1, **dadurch gekennzeichnet, dass** Inselsilikate Aluminosilikate sind, insbesondere Alumosilikate.

3. Zusammensetzung nach Anspruch 1 oder 2, **dadurch gekennzeichnet, dass** das Inselsilikat Dysthen ist.

4. Zusammensetzung nach einem der Ansprüche 1 bis 3, **dadurch gekennzeichnet, dass** der Kunststoff ein Elastomer, ein thermoplastisches oder duroplastisches Polymer ist.

5. Zusammensetzung nach einem der Ansprüche 1 bis 4, **dadurch gekennzeichnet, dass** der Kunststoff ausgewählt wird aus Polyamid, Polyethylen, Polypropylen, Polystyrol, Polycarbonat, Polyester, Polyurethan, Epoxyharze sowie Mischungen und Copolymerisate davon.

6. Zusammensetzung nach einem der Ansprüche 1 bis 5, **dadurch gekennzeichnet, dass** mehrere Additive kombiniert eingesetzt werden.

7. Zusammensetzung nach einem der Ansprüche 1 bis 6, wobei die Korngröße (d50) des Additivs im Bereich von 1 bis 50 µm liegt.

8. Zusammensetzung nach einem der Ansprüche 1 bis 7, wobei die Additive silanisiert sind.

9. Verfahren zur Herstellung einer Zusammensetzung nach einem der Ansprüche 1 bis 8 umfassend den Schritt des Vermischens eines Kunststoffs mit 20 bis 80 Gew.-% mindestens eines Additivs ausgewählt aus Inselsilikaten, metallischem Silicium und Mischungen hiervon.

10. Verwendung eines Additivs ausgewählt aus Inselsilikaten, metallischem Silicium und Mischungen davon zur Verbesserung der Wärmeleitfähigkeit von Kunststoffen.

## Claims

1. A composition comprising a plastic material and from 20 to 80% by weight of an additive selected from nesosilicates, metallic silicon, and mixtures thereof.

2. The composition according to claim 1, **characterized in that** said nesosilicates are aluminosilicates, especially alumosilicates.

3. The composition according to claim 1 or 2, **characterized in that** said nesosilicate is disthene.

4. The composition according to any of claims 1 to 3, **characterized in that** said plastic material is an elastomer, thermoplastic or thermoset polymer.

5. The composition according to any of claims 1 to 4, **characterized in that** said plastic material is selected from polyamide, polyethylene, polypropylene, polystyrene, polycarbonate, polyester, polyurethane, epoxy resins, and mixtures and copolymers thereof.

6. The composition according to any of claims 1 to 5, **characterized in that** several additives are employed in combination.

7. The composition according to any of claims 1 to 6, wherein the grain size (d50) of the additive is within a range of from 1 to 50 µm.

8. The composition according to any of claims 1 to 7, wherein said additives are silanized.

9. A process for preparing a composition according to any of claims 1 to 8, comprising the step of mixing a plastic material with from 20 to 80% by weight of at least one additive selected from nesosilicates, metallic silicon, and mixtures thereof.

10. Use of an additive selected from nesosilicates, metallic silicon, and mixtures thereof for improving the thermal conductivity of plastic materials.

## Revendications

1. Composition contenant une matière plastique ainsi que 20 à 80 %-poids d'un additif sélectionné parmi des nésosilicates, du silicium métallique et des mélanges de ceux-ci.

2. Composition selon la revendication 1, **caractérisée en ce que** les nésosilicates sont des aluminosilicates, en particulier des alumosilicates.

3. Composition selon la revendication 1 ou 2, **caractérisée en ce que** le nésosilicate est du disthène.

4. Composition selon l'une des revendications 1 à 3, **caractérisée en ce que** la matière plastique est un élastomère, un polymère thermoplastique ou thermodurcissable.

5. Composition selon l'une des revendications 1 à 4, **caractérisée en ce que** la matière plastique est sélectionnée parmi le polyamide, le polyéthylène, le polypropylène, le polystyrène, le polycarbonate, le polyester, le polyuréthane, des résines époxy ainsi que des mélanges et copolymères de ceux-ci.

6. Composition selon l'une des revendications 1 à 5, **caractérisée en ce que** plusieurs additifs sont utilisés de façon combinée.

7. Composition selon l'une des revendications 1 à 6, la granulométrie (d50) de l'additif se situant dans la plage de 1 à 50 µm.

8. Composition selon l'une des revendications 1 à 7, les additifs étant silanisés.

9. Procédé de fabrication d'une composition selon l'une des revendications 1 à 8, comprenant l'étape de mixage d'une matière plastique avec 20 à 80 %-poids d'au moins un additif sélectionné parmi des nésosilicates, du silicium métallique et des mélanges de ceux-ci.

10. Utilisation d'un additif sélectionné parmi des nésosilicates, du silicium métallique et des mélanges de ceux-ci pour l'amélioration de la conductibilité thermique de matières plastiques.
